Europäisches Patentamt

(19) European Patent Office

Office européen des brevets

(11) Numéro de publication: **0 104 114 B1**

(12) **FASCICULE DE BREVET EUROPEEN**

(45) Date de publication du fascicule du brevet: **20.05.87**

(51) Int. Cl.⁴: **G 02 B 27/00**, G 02 B 5/32

(21) Numéro de dépôt: **83401786.5**

(22) Date de dépôt: **13.09.83**

(54) **Dispositif viseur à miroir holographique, et procédé de fabrication du miroir.**

(30) Priorité: **21.09.82 FR 8215906**

(43) Date de publication de la demande:
**28.03.84 Bulletin 84/13**

(45) Mention de la délivrance du brevet:
**20.05.87 Bulletin 87/21**

(84) Etats contractants désignés:
**DE GB SE**

(56) Documents cités:
**EP-A-0 007 039**
**FR-A-2 411 436**
**GB-A-2 020 843**
**GB-A-2 039 383**
**US-A-3 940 204**

**REVIEW OF SCIENTIFIC INSTRUMENTS, vol. 51, no. 6, juin 1980, pages 809-813, American Institute of Physics, New York, US S. ANANDA RAO et al.: "Holographic methods for the fabrication of various types of mirrors"**

(73) Titulaire: **THOMSON-CSF**
**173, Boulevard Haussmann**
**F-75379 Paris Cedex 08 (FR)**

(72) Inventeur: **Arondel, Patrick**
**THOMSON-CSF SCPI 173, bld Haussmann**
**F-75379 Paris Cedex 08 (FR)**
Inventeur: **Gauthier, François Hugues**
**THOMSON-CSF SCPI 173, bld Haussmann**
**F-75379 Paris Cedex 08 (FR)**
Inventeur: **Levaillant, Denis**
**THOMSON-CSF SCPI 173, bld Haussmann**
**F-75379 Paris Cedex 08 (FR)**

(74) Mandataire: **Trocellier, Roger et al**
**THOMSON-CSF SCPI 19, avenue de Messine**
**F-75008 Paris (FR)**

**PROCEEDINGS OF THE IEEE 1982 NATIONAL AEROSPACE AND ELECTRONICS CONFERENCE, Dayton, 18-20 mai 1982, vol. 2, pages 752-759, IEEE, New York, USA J.H. GARD: "Holographic huds DE-mystified"**

## Description

L'invention concerne un dispositif viseur à miroir holographique et le procédé de fabrication du miroir.

Des dispositifs viseurs sont particulièrement utilisés dans les avions sous forme de dispositif viseur tête haute. Le but de ces dispositifs viseur tête haute est de superposer à l'infini, au paysage vu par un pilote, des indications concernant des opérations de pilotage ou de tir de telle manière, qu'à tout instant, sans avoir à détourner son regard, ce pilote puisse tenir compte à la fois de la nature du terrain et des indications qui lui sont fournies par collimation optique.

Les dispositifs viseurs comportent généralement une source lumineuse, formée d'un ou plusieurs objets lumineux, placée au foyer d'un objectif optique, ce dernier servant à collimater la source, et une lame partiellement réfléchissant à faces planes et parallèles, réfléchissant d'une part vers l'oeil de l'observateur l'image de la source lumineuse collimatée, et transmettant d'autre part le rayonnement en provenance du paysage. Ces montages présentent deux inconvénients principaux.

Premièrement les lames ne sont pas sélectives spectralement, elles transmettent ou réfléchissent, d'une manière égale, tout le spectre visible. Les lames sont recouvertes de traitements neutres. Or, pour la réflexion seul le spectre de longueur d'onde de la source lumineuse a besoin d'être réfléchi. L'utilisation de filtres de couleur a été envisagée, mais l'efficacité de ces traitements et les largeurs spectrales que l'on peut obtenir conduisent à une atténuation importante de la vision du paysage. En effet, les filtres de couleur réalisés sur ces lames sont généralement des filtres à large bande. En conséquence, le spectre de fréquence du rayonnement transmis à travers la lame partiellement réfléchissante, est privé d'une gamme de couleurs. Ceci a pour effet de réduire la perception que peut avoir le pilote de l'avion, les zones du paysage colorées en des nuances différentes n'étant plus aisément discernables.

Deuxièmement les lames ne sont pas sélectives en angle. Ceci signifie que tous les rayons de lumière, issus de l'objectif du collimateur, sont réfléchis par la face réfléchissante de la lame. Or seuls les rayons lumineux arrivant dans la zone dans laquelle peut se trouver l'oeil de l'observateur sont utiles. Ainsi jonc la partie utile des rayons réfléchis par une lame partiellement réfléchissante à face plane de l'art antérieur n'est qu'une petite fraction de la totalité des rayons réfléchis par cette lame.

Il est connu d'utiliser une lame holographique dans un viseur; en particulier, la publication de brevet français FR—A—2.447.045 décrit un collimateur de pilotage de ce genre où l'élément holographique agit comme un miroir partiellement réfléchissant la lumière venant du tube cathodique, avec des propriétés sélectrices en fréquence et en direction; l'agencement est plus particulièrement réalisé pour produire des réflexions successives intenses entre les faces de la gluce et faire sortir la lumière provenant de l'affichage en plusieurs emplacements distincts, de façon à accroître la plage de positions de la tête de l'observateur en site. En effet, le miroir ne réfléchit, pour chacun de ces points, qu'un pourcentage du rayonnement lumineux en provenance de l'objectif mais dans toutes les directions. Les rayons lumineux en provenance de l'objectif se répercutent plusieurs fois sur le miroir holographique. A chacun de ces points un certain pourcentage du rayonnement lumineux est réfléchi en direction du point suivant, ce pourcentage étant différent pour chacun des points de manière à obtenir une visualisation homogène, sur toute la hauter du miroir. Bien que le défaut d'atténuation spectrale de la transmission soit faible dans les solutions à miroir holographique, le défaut de luminosité de la source collimatée subsiste d'autant plus s'il y a plusieurs réflexions.

L'invention a pour objet un dispositif viseur comportant une lame holographique partiellement réfléchissante sans puissance optique, ne provoquant que peu d'atténuation de la luminosité du paysage observé en transmission et peu de défaut de luminosité de la source lumineuse observée en réflexion. Ce miroir holographique permet de résoudre d'autres problèmes que ceux résolus par des hologrammes possédant de la puissance optique et utilisés sur des dispositifs viseurs.

L'invention propose de réaliser un dispositif viseur à miroir holographique comportant au moins une source lumineuse d'etendue déterminée à collimater, un objectif optique de collimation, et un miroir holographique sans puissance optique partiellement réfléchissant pour la vision simultanée du paysage extérieur par transmission et de celle de l'image collimatée de la source lumineuse par réflexion, ladite vision simultanée étant assurée pour l'oeil d'un observateur situé dans une zone pupillaire, cette zone définissant l'amplitude utile du déplacement de cet oeil à une distance déterminée d'observation du centre du miroir, caractérisé en ce que le miroir holographique est susceptible d'être obtenu par enregistrement d'une plaque photosensible effectue au moyen d'une première source et d'une deuxième source lumineuses cohérentes entre elles, ponctuelles, omnidirectionnelles, situées symétriquement par à ladite plaque photosensible, et éloignées du milieu de cette plaque photosensible d'une distance et dans une direction respectivement identiques à la distance et à la directions (an Bragg) régissant, dans l'utilisation future du dispositif du viseur, les positions respectives du miroir holographique et de ladite zone pupillaire, ledit l'enregistrement étant ainsi effectué en chacun des points dudit miroir avec des angles de Bragg différents, en sorte que le miroir holographique resultant réfléchit en chacun de ses points le rayonnement lumineux en provenant de l'objectif suivant des directions privilégiées dirigées sensiblement vers le centre de ladite zone pupillaire.

L'invention sera mieux comprise par la description suivante donnée à titre d'exemple non limitatif, et illustée par les figures qui l'accompagnent. Sur ces différentes figures les mêmes repères désignent les mêmes éléments. Pour des raisons de clarté les cotes et proportions des divers éléments ne sont pas respectées. Ces figures représent:

— figure 1, un dispositif viseur du type considéré dans l'invention;

— figure 2, l'étendue d'une source observée par l'oeil d'un observateur situé dans la zone rapprochée d'un objectif charge de collimater cette source;

— figure 3, l'etendue de la source observée par l'oeil d'un observateur situé dans la zone éloignée de l'objectif;

— figure 4, l'étendue de la source observée par l'oeil d'un observateur se déplaçant transversalement dans la zone éloignée de l'objectif;

— figure 5, l'ouverture angulaire nécessaire d'une plaque holographique jouant le rôle de miroir dans l'invention;

— figure 6, l'ensemble des directions privilégiées du miroir holographique;

— figures 7 et 8, les courbes de tolérence angulaire et de tolérance chromatique du miroir holographique:

— figure 9, la mise en place du miroir holographique dans le dispositif viseur de l'invention;

— figure 10, un montage optique permettant l'enregistrement du miroir holographique précédent;

— figure 11, un procédé servant à l'enregistrement du miroir holographique selon l'invention;

— figure 12, une variante du procédé d'enregistrement du miroir holographique selon l'invention.

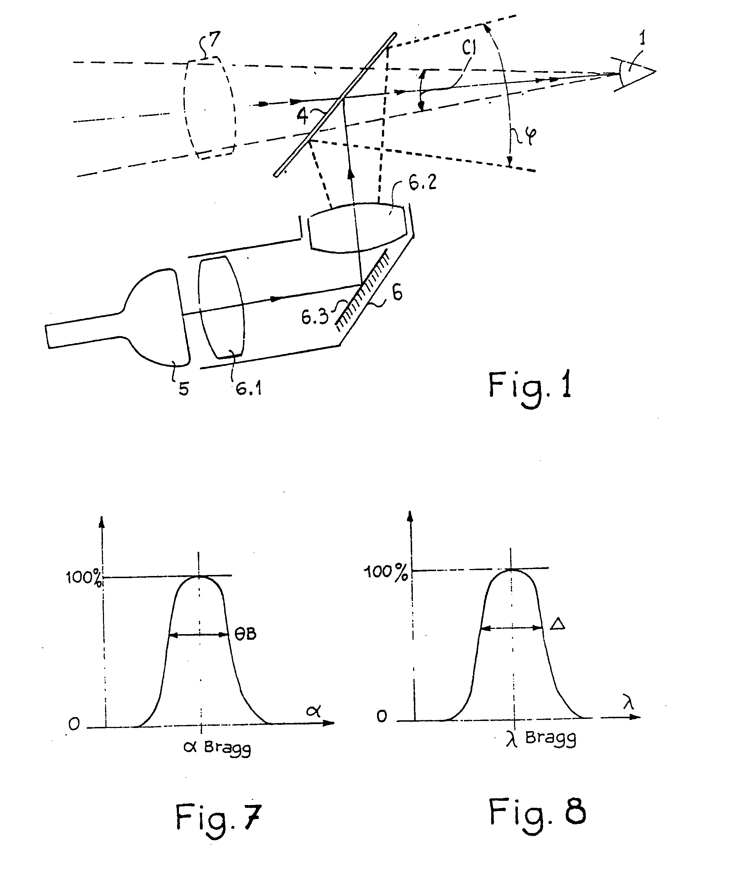

La figure 1 représente un dispositif viseur du type considéré dans l'invention. On distingue sur cette figure, l'oeil 1 d'un observateur percevant dans son champ instantané CI, délimité par les traits discontinus, une partie du champ total φ, délimité par les pointillés. Cet oeil 1 observe en provenance de la gauche le rayonnement représentatif du paysage transmis au travers de la lame 4 partiellement réfléchissante à faces parallèles. Dans l'invention la lame conventionnelle 4 est remplacée par un miroir holographique dont les propriétés photométriques sont décrites plus loin. Il observe également l'image de la source lumineuse 5, collimatée à l'infini par l'objectif optique 6, et réfléchie par la lame 4. Cette source lumineuse peut être réalisée notamment à partir d'un écran cathodique. L'oeil de cet observateur perçoit donc, sans effort d'accomodation le paysage et l'image de la source lumineuse 5. L'objectif peut être constitué d'une lentille de puissance 6.1, d'une lentille de champ 6.2 et d'un miroir plan 6.3. L'orientation angulaire des rayons lumineux extrémes

émanant de l'objectif est révélatrice du champ spatial de la source lumineuse 5.

Enfin les rayons émis dans toutes les directions à la sortie de l'objectif 6 sont également réfléchis dans toutes les directions par la lame 4 partiellement réfléchissante notamment dans une direction où l'oeil de l'observateur n'ira jamais se placer. En effet on admet que l'oeil d'un observateur ne peut se déplacer normalement que d'un petit écart de part et d'autre de sa position de repos, lorsque cet observateur relève ou abaisse sa tête par exemple. Le déplacement de l'oeil est limité à quelques centimètres, en général d'environ dix centimètres.

Pour mettre en évidence les qualités d'une lame partiellement réfléchissante, réalisée selon l'invention à partir d'un miroir holographique, il est nécessaire de connaître les contraintes imposées par l'ensemble collimateur constitué par la source lumineuse 5 et l'objectif 6. Dans un premier temps on examinera quelle est la nature des observations faites par l'oeil d'un observateur regardant directement l'objectif. Par la suite on intercalera un dispositif optique, et en particulier le miroir holographique selon l'invention, entre l'oleil de l'observateur et l'objectif.

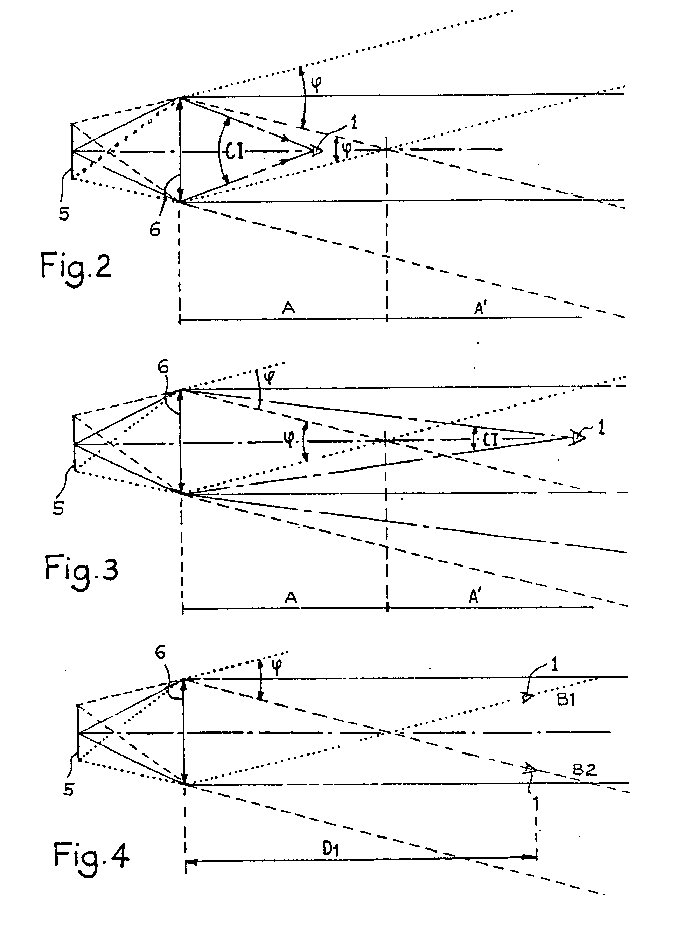

Les figures 2, 3 et 4 permettant la compréhension des termes définis ci-dessous:

— le champ total φ est le champ observable à travers l'objectif, il ne dépend que de la dimension de la source 5 et de la focale de l'objectif 6;

— le champ instantané CI est le champ observable par l'oeil à un instant donné, il ne dépend que de la dimension de l'objectif et de la position de l'oeil par rapport à cet objectif, il est égal à l'angle CI sous lequel l'oeil voit la pupille de l'objectif.

On distingue en particulier, sur les figures 2, 3 et 4 des rayons lumineux en traits continus orientés horizontalement, image du centre de la source 5, des rayons extrêmes tracés en tirets orientés vers le bas et à droite, image de la partie supérieure de la source 5 et des rayons extrêmes en pointillés orientés vers le haut à droite, et image de la partie inférieure de la source 5. Le champ total φ et le champ instantané CI apparaissent sur ces figures. Le point d'intersection des rayons extrêmes, en pointillés et en tirets, détermine deux zone A et A' d'observation plus ou moins éloignées de l'objectif.

La figure 2 montre un exemple dans lequel l'oeil est placé dans la zone rapprochée A de l'objectif où le champ instantané CI est supérieur au champ total φ du viseur.

La figure 3 donne un exemple dans lequel l'oeil est placé dans la zone éloignée A' où le champ instantané CI est inférieur au champ total φ. Dans ce cas l'observateur est obligé de se déplacer pour observer le champ total. C'est cette situation qui est celle généralement rencontrée dans les viseurs à bord d'avions militaires.

Sur la figure 4 on a montré le déplacement de l'oeil d'un observateur, situé dans la zone A' à une distance D1 donnée de l'objectif. Ce déplacement vertical s'effectue entre deux positions limites B1 ou B2. Ces positions B1 et B2, se trouvant sensiblement sur des rayons lumineux latéraux orientés dans des directions extrêmes du champ total, permettent à l'observateur, déplaçant son oeil d'une position à l'autre, de couvrir la totalité de l'étendue la source lumineuse 5 à cette distance D1 d'observation.

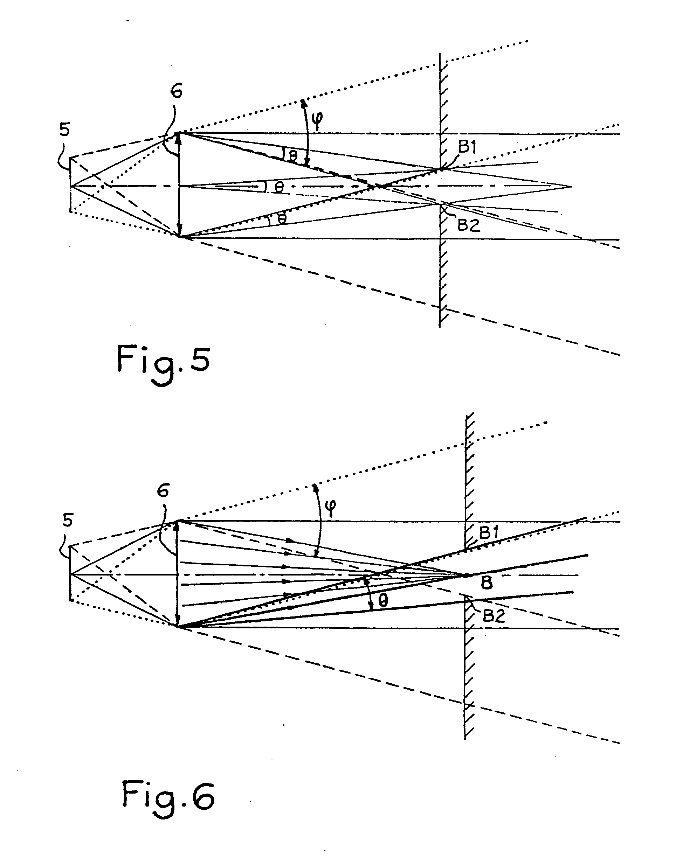

Sur la figure 5 le miroir holographique n'est pas représenté mais le rôle qu'il doit jouer y est mis en évidence. On distingue sur cette figure, reprenant les mêmes éléments que la précédente, la limite du déplacement vertical de l'oeil entre B1 et B2 définissant une zone pupillaire B1—B2. De tous les rayons issus d'un point quelconque de l'objectif 6 seuls les rayons lumineux, situés dans l'ouverture angulaire θ, s'appuyant sur la zone pupillaire B1—B2, seront utilement reçus par l'oeil d'un observateur placé dans cette zone pupillaire. Les autres rayons lumineux extérieurs à cette ouverture angulaire θ ne sont en effect jamais reçus par l'oeil de l'observateur.

Sur la figure 6, reprenant les mêmes éléments, on remarque l'ensemble des directions privilégiées des rayons lumineux utiles, émanant de chaque point de l'objectif 6 en direction du centre B de la zone pupillaire B1—B2.

Ainsi dans l'invention le problème optique que doit résoudre le dispositif optique intercalé entre la zone pupillaire B1—B2 et l'objectif 6 est: d'une part jouer le rôle de transmission d'une lame partiellement réfléchissante à faces planes et parallèles, et d'autre part, réfléchir, dans les directions privilégiées, et avec les ouvertures angulaires limitées θ, des rayons lumineux en provenance de chaque point de l'objectif optique. Ce dispositif optique est selon l'invention constitué par un miroir holographique plan ayant des propriétés photométriques en transmission et en réflexion et disposé dans le dispositif viseur au lieu et place d'une lame partiellement réfléchissante conventionnelle.

Les dispositifs optiques holographiques sont des dispositifs interferométriques dans lesquels une plaque de type photosensible est enregistrée sous l'action de l'éclairement provenant de deux sources lumineuses monochromatiques distinctes et cohérentes entre elles. Dans un exemple, le matériau utilisé pour la plaque photosensible est de la gélatine bichromatée appliquée en couche épaisse, de l'ordre de plusieurs dizaines de fois la longueur d'onde de l'onde incidente, de manière à avoir un coefficient de réflexion de l'hologramme réalise égal à 100%. En particulier la longueur d'onde des ondes lumineuses servant à l'enregistrement du miroir holographique selon l'invention sera la même que celle de la source lumineuse 5 que l'on cherche à collimater. Il est à noter que la variation de l'épaisseur du matériau photosensible, avant et après enregistrement, permet de modifier cette condition d'égalité des longueurs d'onde d'enregistrement et de restitution. Dans un exemple cette source lumineuse 5 est constituée par un tube cathodique émettant une lumière verte dont le spectre est suffissamment étroit de l'ordre de 60 Å environ. Ainsi, le miroir holographique autorise en transmission le passage de la quasi totalité des rayons lumineux émis par le paysage dans le spectre visible, hormis ceux émis d'une manière très monochromatique par la source lumineuse 5 et qui sont eux, les sels réfléchis par le miroir holographique.

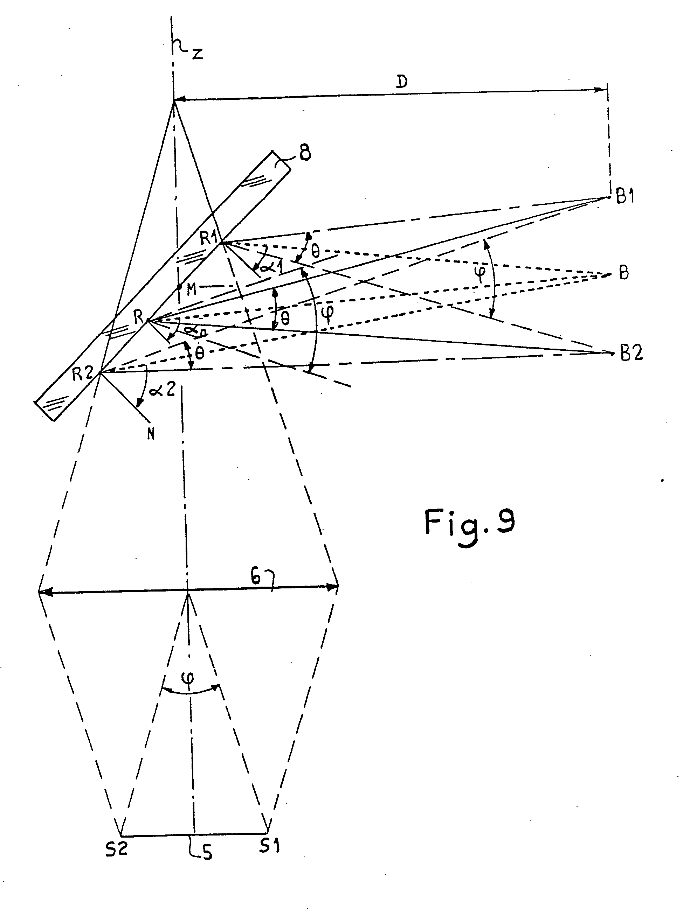

Sur les figures 7 et 8 sont représentés les courbes de tolérance angulaire et de tolérance spectrale relatives à des plaques holographiques utilisées comme miroir, avec une incidence moyenne des rayons sur ce miroir égale à α Bragg, et une longueur d'onde de l'onde monochromatique incidente sur ce miroir égale à λ Bragg. La variation verticale représentée sur ces courbes représente le rendement de réflexion.

Ce rendement de réflexion mesure le rapport de la quantité de lumière réfléchie par un miroir holographique à la quantité de lumière incidente sur ce miroir holographique. On remarque que l'on obtient un rendement de réflexion maximum lorsque l'angle d'incidence de l'onde lumineuse sur le miroir holographique est égale à α Bragg, l'angle de Bragg de ce miroir holographique, et lorsque la longueur d'onde de l'onde lumineuse incidente sur le miroir est égale à λ Bragg, la longueur d'onde de Bragg de ce miroir holographique. On détermine physiquement sur ces courbes une bande passante à un certain pourcentage. Dans un exemple ce pourcentage est de 80%. Sur la courbe angulaire de la figure 7 on détermine une bande passante, dont la largeur est exprimée par θB sur cette figure. D'une manière habituelle θB est de l'ordre de 10 degrés c'est-à-dire de ±5 degrés autour de α Bragg. Dans un exemple α Bragg=45°.

La bande passante spectrale à 80% autour de la longueur d'onde de Bragg, λ Bragg, du miroir holographique selon l'invention est Δ. Cette largeur de bande Δ est directment liée aux conditions d'enregistrement du miroir holographique. Dans un exemple Δ est de l'ordre de 100 Å. Il est nécessaire de se rappeler ici que les grandeurs θB et Δ ne sont pas indépendantes l'une de l'autre mais sont liées entre elles par une relatiun issue de la loi de Bragg. Selon cette loi, plus la bande passante angulaire d'un hologramme est grande et plus la bande passante spectrale de cet hologramme est grande également.

L'intérêt à réduire θB est directement lié à des intérêts photométriques. En effet plus θB est faible, plus Δ est faible et plus la plaque holographique est transparente à l'onde lumineuse, spectralement large, émise par le paysage. En effet, si un miroir holographique a la particularité de réfléchir des ondes émises dans la bande spectrale Δ il a aussi la particularité d'admettre en transmission une onde émise dans la bande spectrale totale diminuée la bande spectrale Δ. Quand Δ est faible la luminosité et le constraste d'un paysage observé à travers un til miroir s'en trouvent améliorés par rapport à une lame partiellement réfléchissante, glace neutre ou glace munie de filtres sélectifs de large bande. Par ailleurs la luminosité de la source collimatée ne sera pas affectée, celle-ci pouvant émettre une lumière de spectre étroit.

On note en conséquence que si θB est grand, par la loi de Bragg, Δ sera grand également. On peut déjà noter, ce qui sera précisé par la suite, que dans le cas d'un miroir holographique enregistré en tous ses points avec un angle d'incidence α Bragg unique la bande passante angulaire θB doit être égale au champ total φ de la source 5. Comme le champ total φ est grand, θB sera aussi grand, et conséquemment Δ sera également grand. Le miroir holographique ainsi réalisé ne permettant, en transmission, que le passage d'une onde dont le spectre est réduit d'une bande Δ non négligeable, serait en tous points comparable à une lame partiellement réfléchissante et ne résoudrait pas efficacement le problème posé.

Ces remarques sont illustrées sur la figure 9 qui donne une idée de la mise en place d'un miroir holographique 8 au lieu et place d'une lame conventionnelle dans un dispositif viseur. Ce miroir holographique 8 est, d'une manière préférée, plan, sans que cela soit une obligation. On distingue la source lumineuse 5, limitée dans le plan de la figure à ses deux points extrêmes S1 et S2, un objectif 6 assurant la collimation de la source 5, le miroir holographique 8 et une zone pupillaire B1—B2 située à une distance D du miroir 8 dans une zone éloignée de l'objectif comme vu plus haut. La distance D est la distance séparant le centre B de la zone pupillaire du milieu M du miroir 8. Le milieu M est la trace de l'axe optique Z de l'objectif 6 sur le miroir 8. L'oeil de l'observateur situé dans cette zone pupillaire B1—B2 percoit d'une part le rayonnement du paysage extérieur, provenant de la gauche et transmis au travers du miroir holographique 8, et d'autre part l'image collimatée de la source lumineuse 5 par réflexion sur ce miroir 8.

Selon les dispositions évoquées précédemment l'oeil de l'observateur, se déplaçant de la position B1 à la position B2, situées sensiblement toutes deux sur des rayons latéraux extrêmes dessinés en tirets, perçoit au cours de son déplacement la totalité de la source lumineuse 5 comprise entre ses limites S1 et S2 dont partent ces rayons lumineux en tirets. On remarque que les rayons lumineux utiles, passant par un point courant R de la face réfléchissante de ce miroir holographique 8 sont compris dans l'angle θ formé par les directions RB1 et RB2 dessinées en traits pleins. On distingue la différence entre l'ouverture angulaire utile θ, et l'ouverture φ du champ total de la source 5 délimitée par des rayons parallèles aux rayons latéraux. Il est inutile, dans ces conditions, que le miroir holographique 8 réfléchisse tous les rayons qui y aboutissent. Aux points R1 et R2, où aboutissent sur le miroir 8 les rayons extrêmes latéraux image des extrêmités de la source 5, les deux directions particulières de réflexion relatives à l'oeil d'un observateur placé en B1, sont les directions R1—B1 et R2—B1. Avec l'oeil d'un observateur placé au point B2 on en déduit des directions particulières R1—B2 et R2—B2. La direction privilégiée de réflexion du miroir holographique 8 est donc, d'un point courant R de ce miroir holographique, celle dessinée en pointillé et passant par le milieu B de la zone pupillaire B1—B2. Cette constation non évidente a priori enseigne le type du miroir holographique 8 qu'il convient de réaliser pour une telle application.

En considérant un point courant de réflexion allant de R1 à R2 sur le miroir holographique 8 on constate que les angles faits par les directions privilégiées avec la normale N au miroir varient de α1 à α2. Dans le cas présent on note que α1 est inférieur à α2 et qu'ils sont cependant tous deux proches de 45°, variant en particulier de ±10° environ autour de cette valeur. On admet que l'ouverture utile θ varie peu quand le point courant passe de R1 à R2: cette variation est petite au premier ordre devant la variation α2—α1.

Si le miroir holographique est enregistré en tous ses points avec un angle de réflexion de Bragg unique, par exemple

$$\alpha\ Bragg = \frac{\alpha 1 + \alpha 2}{2},$$

la bande passante angulaire θB de ce miroir devra être telle qu'elle contienne toutes les ouvertures angulaires utiles en chacun des points du miroir. Ceci signifie que dans ce cas on est conduit à réaliser un miroir dont la bande passante est telle que (figures 7 et 9):

$$\alpha\ Bragg + \frac{\theta B}{2} \geqslant \alpha 1 + \frac{\theta}{2} \quad \text{en R1,}$$

ou

$$\alpha\ Bragg + \frac{\theta B}{2} \geqslant \alpha 2 + \frac{\theta}{2} \quad \text{en R2}$$

et telle que

$$\alpha\ Bragg - \frac{\theta B}{2} \leqslant \alpha 1 - \frac{\theta}{2} \quad \text{en R1,}$$

ou

$$\alpha\ Bragg - \frac{\theta B}{2} \leqslant \alpha 2 - \frac{\theta}{2} \quad \text{en R2.}$$

Les termes situés à gauche dans ces équations d'inégalité caractérisent les paramètres intrinsèques du miroir holographique, les termes situés à droite caractérisent les conditions d'utilisation de ce miroir.

Dans l'exemple choisi ces inégalités conduisent à:

$$\frac{\theta B}{2} \geqslant \frac{\alpha 1 - \alpha 2}{2} + \frac{\theta}{2}$$

et/ou

$$\frac{\theta B}{2} \geqslant \frac{\alpha 2 - \alpha 1}{2} + \frac{\theta}{2} ,$$

dont on retiendra: $\theta B > \alpha 2 - \alpha 1 + \theta$ qui est une condition englobant les autres. Il est évident à l'examen de cette dernière inégalité que $\theta B$ devra être supérieur à $\varphi$ puis qu'un calcul montre par ailleurs que

$$\varphi = (\alpha 2 + \frac{\theta}{2}) - (\alpha 1 - \frac{\theta}{2}).$$

Or $\varphi$ est grand donc $\theta B$ devrait être grand et le miroir holographique qui satisferait à ces conditions d'optique géométrique ne rendrait pas les effets photométriques attendus par l'invention.

Si le miroir holographique est enrégistre en chacun de ses points avec des angles de Bragg, an Bragg, variant de à $\alpha 1$, $\alpha 2$ selon que l'on se déplace de R1 à R2, les conditions précédentes s'écrivent:

$$\alpha 1 \text{ Bragg} + \frac{\theta B}{2} \geqslant \alpha 1 + \frac{\theta}{2} \quad \text{en R1,}$$

ou

$$\alpha 2 \text{ Bragg} + \frac{\Theta B}{2} \geqslant \alpha 2 + \frac{\theta}{2} \quad \text{en R2}$$

et

$$\alpha 1 \text{ Bragg} - \frac{\theta B}{2} \leqslant \alpha 1 - \frac{\theta}{2} \quad \text{en R1,}$$

ou

$$\alpha 2 \text{ Bragg} - \frac{\theta B}{2} \leqslant \alpha 2 - \frac{\theta}{2} \quad \text{en R2.}$$

Ces conditions conduisent à la condition unique:

$$\theta B \geqslant \theta$$

Or $\theta$ est faible, dans la pratique il vaut autour de 7°, donc un miroir holographique ayant de telles propriétés d'optique géométrique, telles que $\theta B$ est trés peu supérieur à $\theta$, satisfait également aux conditions photométriques de l'invention.

La figure 9 enseigne qu'il y a lieu de privilégier le fonctionnement du miroir holographique 8 en direction de la zone pupillaire où sera placé l'oeil d'un observateur lorsque ce miroir holographique sera utilisée comme lame partiellement réfléchissante dans un dispositif viseur. La source lumineuse qui pourra enregistrer un tel miroir holographique est tout simplement une source lumineuse ponctuelle disposée, par rapport au miroir, à l'endroit du milieu de cette zone pupillaire. Les rayons lumineux émanant d'une telle source ponctuelle enregistrent de cette façon naturellement le miroir holographique avec les directions privilégiées requises. On sait par ailleurs moduler la largeur de la bande passante $\theta B$ du miroir holographique 8 en agissant sur les caractéristiques physicochimiques connues de son procédé de réalisation.

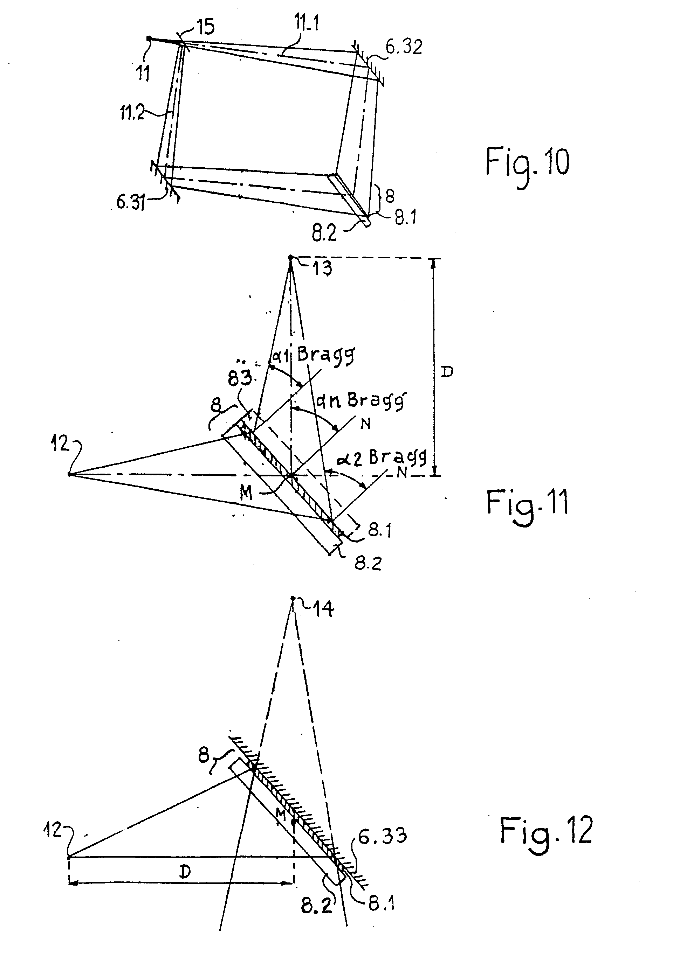

Sur la figure 10 le miroir holographique 8, est composé d'une couche de matériau photosensible 8.1 disposée sur un support transparent 8.2. L'enregistrement du miroir holographique s'effectue avec des sources lumineuses ponctuelles monochromatiques et cohérentes. Dans le montage décrit on distingue une source lumineuse ponctuelle 11 séparé en deux rayonnements en ondes sphériques cohérents 11.1 et 11.2 par une lame plane partiellement réfléchissante à faces parallèles 15. Ces deux rayonnements sont réfléchis par l'intermédiaire de miroirs réfléchissants 6.31 et 6.32 de part et d'autre du miroir holographique 8 à enregistrer. Ce miroir holographique 8 est disposé selon le plan bissecteur des faisceaux de rayons venant éclairer respectivement chacune de ses faces.

On distingue sur la figure 11 le procédé d'enregistrement d'un miroir holographique 8 selon l'invention composé d'une couche en un matériau photosensible 8.1, dont l'épaisseur est égale à plusieurs dizaines de fois la longueur d'onde de l'onde incidente utilisée pour l'enregistrement de cet hologramme, et d'une plaque de support 8.2 en un matériau transparent. Ce miroir holographique 8 sera enregistré par deux sources lumineuses, monochromatiques, cohérentes entre elles, ponctuelles, et omnidirectionnelles 12 et 13 situées symétriquement par rapport au plan de ce miroir holographique 8, et à une distance D du milieu de ce miroir telle que cette distance D soit égale, dans l'utilisation future, à la distance séparant l'oeil d'un observateur du milieu M du miroir holographique du dispositif viseur. Pour mieux respecter la symétrie on peut être amené à utiliser une contre plaque 8.3 identique à la plaque 8.2 et située de l'autre côté de la couche photosensible 8.1 sur le trajet de l'onde issue de la source 13. Par construction on remarque que l'angle d'enregistrement, an Bragg, n'est pas le même en tout point de ce miroir holographique. En particulier il est plus faible dans la partie supérieure de ce miroir holographique que dans la partie inférieure, c'est-à-dire $\alpha 1$ Bragg inférieur à $\alpha 2$ Bragg.

Selon l'invention, après cette opération d'enregistrement du miroir holographique 8 l'oeil d'un observateur placé par exemple à l'emplacement de la source lumineuse 13 par rapport au miroir holographique 8 ne verra, des rayons lumineux en provenance de la droite de la figure 11 et orientés dans toutes les directions, que ceux frappant le miroir holographique 8 avec une incidence comprise en chaque point entre

$$\text{an Bragg} \pm \frac{\theta B}{2}.$$

En effet le rendement en réflexion du miroir holographique 8 pour des rayons lumineux incidents avec une incidence extérieure à cette gamme peut schématiquement être considéré comme nul; donc le miroir holographique 8 ne produira aucun rayon réfléchi dans ces directions.

Les sources lumineuses ponctuelles 12 et 13 utilisées pour l'enregistrement de ce miroir holographiques 8 sont des sources lumineuses cohérentes monochromatiques dont la longueur d'onde sera d'une manière préférée dans l'invention égale à la longueur d'onde des rayons lumineux de la source lumineuse 5 dont le miroir holographique 8 devra assurer la réflexion. Les sources lumineuses 12 et 13 sont placées lors de l'enregistrement de part et d'autre du miroir holographique 8 et par ailleurs, étant disposées d'une manière symétrique par rapport à ce miroir holographique, elles ne confèrent à ce miroir aucune puissance optique. Les sources lumineuses 12 et 13 peuvent être obtenues à partir d'une source lumineuse ponctuelle unique 11 divisée par une lame à faces parallèles 15 dans un montage similaire à celui décrit dans la figure 10.

La figure 12 enseigne une manière préférée de réalisation du miroir holographique 8 selon l'invention. Selon ce montage optique il suffit de disposer un miroir réfléchissant 6.33 sur la couche photosensible 8.1 du miroir holographique 8, éclairé lors de l'enregistrement par une seule source ponctuelle monochromatique 12 située à une distance D du milieu M de cette plaque holographique 8, du côté de la plaque support 8.2. Le miroir 6.33 donne par réflexion une image 14 de la source lumineuse 12. La source lumineuse 12 et la source lumineuse 14 sont évidemment cohérentes entre elles et permettent l'enregistrement aisé du miroir holographique 8 selon les conditions décrites par la figure 11 précédente.

La présente invention s'applique à des dispositifs viseur tête haute aéroportés. Elle s'applique d'une manière plus générale à tous dispositifs optiques possédant une pupille oculaire par opposition à une pupille objet et utilisant des lames partiellement réfléchissantes pour superposer à un paysage observé les indications d'une source lumineuse annexe. Ces dispositifs optiques sont du type viseurs goniométriques par exemple.

**Revendications**

1. Dispositif viseur à miroir holographique comportant au moins une source lumineuse (5) d'étendue déterminée à collimater, un objectif optique (6) de collimation, et un miroir holographique (8) sans puissance optique partiellement réfléchissant pour la vision simultanée du paysage extérieur par transmission et de celle de l'image collimatée de la source lumineuse par réflexion, ladite vision simultanée étant assurée pour l'oeil d'un observateur situé dans une zone pupillaire (B1—B2), cette zone définissant l'amplitude utile du déplacement de cet oeil à une distance déterminée (D) d'observation du centre (M) di miroir holographique, caractérisé en ce que le miroir holographique (8) est susceptible d'être obtenu par enregistrement d'une plaque photosensible (8.1, 8.2) effectué au moyen d'une premier source lumineuse (12) et d'une deuxième source lumineuse (13) cohérentes entre elles, ponctuelles, omnidirectionnelles, situées symétriquement par rapport à ladite plaque photosensible, et éloignées du milieu (M) de cette plaque photosensible d'une distance et dans une direction respectivement identiques à la distance (D) et à la direction (an Bragg) régissant, dans l'utilisation future du dispositif viseur, les positions respectives du miroir holographique (8) et de ladite zone pupillaire (B1—B2), ledit enregistrement étant ainsi effectué en chacun des points de ladite plaque photosensible avec des angles de Bragg différents, en sorte que le miroir holographique resultant (8) réfléchit en chacun de ses points (R) le rayonnement lumineux en provenance de l'objectif (6) suivant des directions privilégiées (RB) dirigées sensiblement vers le centre (B) de ladite zone pupillaire (B₁—B₂).

2. Dispositif viseur à miroir holographique selon la revendication 1, caractérisé en ce que ledit miroir holographique (8) est plan.

3. Dispositif viseur à miroir holographique selon la revendication 1 ou 2, caractérisé en ce que la deuxième source lumineuse (13) utilisée pour l'enregistrement holographique est constituée par l'image (14) de la première source lumineuse (12) et que cette source image (14) est donnée par un miroir (6.33) plaqué sur la plaque photosensible (8.1, 8.2) du côté de la couche photosensible (8.1), la première source (12) étant placée du côté du support (8.2) lors de l'enregistrement.

**Patentansprüche**

1. Sichtgerät, mit einer zu kollimatierenden Lichtquelle (5) einer bestimmten Ausdehnung, mit einem optischen Kollimationsobjektiv (6) und mit einem teilreflektierenden holographischen Spiegel (8) ohne optische Leistung, für die gleichzeitige Sichtbarmachung der äußeren Landschaft durch den Spiegel hindurch und des kollimatierten Bilds aufgrund einer Reflexion, wobei diese gleichzeitige Sichtbarmachung für das Auge eines Beobachters erfolgt, das sich in einer Pupillenzone (B1—B2) befindet, und diese Zone die nutzbare Verschiebungsamplitude dieses Auges in einem gegebenen Beobachtungsabstand (D) vom Zentrum (M) des holographischen Spiegels definiert, dadurch gekennzeichnet, daß der holographische Spiegel (8) durch Aufzeichnung auf eine lichtempfindliche Platte (8.1, 8.2) mithilfe einer ersten Lichtquelle (12) und einer zweiten Lichtquelle (13) erhalten werden kann, die zueinander kohärent, punktförmig, rundumstrahlend, symmetrisch bezüglich der lichtempfindlichen Platte angeordnet sind und zur Mitte (M) dieser lichtempfindlichen Platte einen Abstand und eine Richtung aufweisen, die Abstand (D) und Richtung (an Bragg) gleichen, die bei der künftigen Nutzung des Geräts für die Positionen des holographischen Spiegels (8) bzw. der Pupillenzone B1—B2) gelten, wobei die Aufzeichnung somit an jedem Punkt der lichtempfindlichen Platte mit unterschiedlichem Braggwinkel erfolgt, sodaß der sich so ergebende holographische Spiegel (8) in jedem dieser Punkte (R) die vom Objektiv (6) gemäß bevorzugten Richtungen (RB), die i.w. auf das Zentrum (B) der Pupillenzone (B1—B2) ausgerichtet sind, kommende Lichtstrahlung reflektiert.

2. Sichtgerät mit einem holographischen Spiegel nach Anspruch 1, dadurch gekennzeichnet, daß der holographische Spiegel (8) eben ist.

3. Sichtgerät mit einem holographischen Spiegel nach Anspruch 1 oder 2, dadurch gekennzeichnet, daß die zweite Lichtquelle (13), die für die holographische Aufzeichnung verwendet wird, aus dem Bild (14) der ersten Lichtquelle (12) besteht und daß diese Bild-Lichtquelle (14) von einem auf die lichtempfindliche Platte (8.1, 8.2), und zwar auf deren lichtempfindliche Schicht (8.1) aufgelegten Spiegel (6.33) gegeben wird, wobei die erste Quelle (12) während der Aufzeichnung auf der Trägerseite (8.2) liegt.

## Claims

1. A viewer comprising at least one light source (5) of a predetermined dimension to be collimated, an optical collimation lens (6) and a partially reflecting holographic mirror (8) without optical power, for simultaneously viewing by transmission the outer landscape and by reflexion the collimated image of the light source, this simultaneous viewing being ensured for the eye of an observer located in a pupil zone (B1—B2) which defines the useful displacement amplitude of this eye at a predetermined observation distance (D) from the center (M) of the holographic mirror, characterized in that the holographic mirror (8) can be obtained by recording on a light sensitive plate (8.1, 8.2) made by means of a first light source (12) and a second light source (13), these sources being mutually coherent, punctiform, omnidirectional, symmetrically disposed with respect to said light sensitive plate and spaced apart from the center (M) of this light sensitive plate by a distance and in a direction which are respectively identical to the distance (D) and the direction (an Bragg) valuable during the future use of the viewer for the respective positions of the holographic mirror (8) and of said pupil zone (B1—B2), said recording being thus obtained in any point of that light sensitive plate with different Bragg angles, such that the resulting holographic mirror (8) reflects in any of these points (R) the light radiation coming from the lens (6) along privileged directions (RB) oriented substantially towards the center (B) of said pupil zone (B1—B2).

2. A viewer with holographic mirror according to claim 1, characterized in that said holographic mirror (8) is a plane mirror.

3. A viewer with holographic mirror according to claim 1 or 2, characterized in that the second light source (13) utilized for the holographic recording is constituted by the image (14) of the first light source (12) and that this image source (14) is given by a mirror (6.33) applied to the light sensitive plate (8.1, 8.2) at the side of the light sensitive layer (8.1), the first source (12) being located during the recording operation on the support side (8.2).

Fig. 1

Fig. 7

Fig. 8

1

Fig.2

Fig.3

Fig.4

2

Fig.5

Fig.6

Fig.9

Fig. 10

Fig. 11

Fig. 12